# EUROPÄISCHE PATENTSCHRIFT

(11) **EP 4 429 930 B1**
(45) Veröffentlichungstag und Bekanntmachung des Hinweises auf die Patenterteilung: **21.01.2026**
(21) Anmeldenummer: 22797758.4
(22) Anmeldetag: 04.10.2022
(51) Int. Cl.: B61G 5/06

(54) **LEITUNGSFÜHRUNGSANORDNUNG UND FAHRZEUG, AUFWEISEND DIE LEITUNGSFÜHRUNGSANORDNUNG**
CABLE GUIDE ASSEMBLY AND VEHICLE HAVING THE CABLE GUIDE ASSEMBLY
ENSEMBLE DE GUIDE-CÂBLE ET VÉHICULE COMPORTANT L'ENSEMBLE GUIDE-CÂBLE

(30) Priorität: 09.11.2021 DE 102021129051
(43) Veröffentlichungstag der Anmeldung: 18.09.2024
(73) Patentinhaber: BizLink Industry Germany GmbH, 91154 Roth (DE)
(72) Erfinder: KNAUER, Philipp, 96170 Lisberg (DE); MARR, Robert, 90469 Nuernberg (DE); BERGEMANN, Daniel, 91056 Erlangen (DE)
(74) Vertreter: Frenkel, Matthias Alexander
(86) Internationale Anmeldenummer: PCT/EP2022/077544
(87) Internationale Veröffentlichungsnummer: WO 2023/083529

(56) Entgegenhaltungen:
- EP-A1- 2 374 685
- DE-A1- 102005 016 568
- DE-A1- 102007 051 050
- JP-A- H04 100 775

## Beschreibung

Die vorliegende Erfindung betrifft eine Leitungsführungsanordnung für ein Fahrzeug zum Führen von zumindest einer Leitung von einem ersten Fahrzeugteil zu einem zweiten Fahrzeugteil, der mit dem ersten Fahrzeugteil gelenkig gekoppelt ist, sowie ein Fahrzeug, das eine derartige Leitungsführungsanordnung aufweist.

Leitungen werden in Fahrzeugen benötigt, um beispielsweise ein Medium zwischen verschiedenen Teilen des Fahrzeugs zu transportieren oder eine elektrische Verbindung zwischen Teilen des Fahrzeugs herzustellen. Besteht das Fahrzeug aus zwei gelenkig miteinander verbundenen Fahrzeugteilen, wie dies beispielsweise bei Schienenfahrzeugen der Fall ist, muss eine Leitung bzw. müssen mehrere Leitungen regelmäßig vorgesehen sein, welche die Fahrzeugteile miteinander verbinden. Aufgrund der gelenkigen Anbindung und der sich daraus ergebenden Bewegung der Fahrzeugteile zueinander muss eine Leitung, die die Fahrzeugteile miteinander verbindet, die relativen Bewegungen der Fahrzeugteile zueinander ebenfalls zulassen und der sich daraus ergebenden Beanspruchung standhalten.

Um dies zu erreichen, wird gemäß einer bekannten Herangehensweise die Leitung in einer Schleifenform oder in Hängebahnen zwischen den Fahrzeugteilen verlegt, sodass letztendlich die Leitung zwischen den Fahrzeugteilen länger ausgestaltet ist, als es für eine direkte Verbindung der Fahrzeugteile notwendig wäre. Bei dieser Lösung wird die Leitung in der Regel in einem oberen Bereich der Fahrzeugteile befestigt und hängt aufgrund der Schwerkraft nach unten in Schleifenform bzw. in Hängebahnen. Dies benötigt jedoch einen freien Raum zwischen den Fahrzeugteilen, der zudem vergleichsweise groß ausgestaltet sein muss. Dieser freie Bauraum ist konstruktiv jedoch nicht immer gegeben.

Um den benötigten freien Raum zwischen den Fahrzeugteilen kleiner zu halten, werden Leitungen gemäß einer weiteren bekannten Herangehensweise zumindest in dem Bereich zwischen den Fahrzeugteilen verwendet, die eine Spiralform oder Helixform aufweisen. Doch auch dann können die Leitungen in Schwerkraftrichtung durchhängen. Zudem können Belastungen auf die Fahrzeugteile oder eine Ermüdung der Leitungen dazu führen, dass eine Längung der Leitungen auftritt und der benötigte freie Raum trotzdem groß gehalten werden muss. Zudem ist eine Ausgestaltung als Spiral- oder Helixform nicht für alle Leitungen möglich. Man denke an große Durchmesser, Material und Temperatur der Leitungen bzw. eines geführten Mediums.

Gemäß einer weiteren bekannten Herangehensweise werden Leitungen in einem Bereich zwischen den Fahrzeugteilen beispielsweise mit einer Stabilisierungsvorrichtung gestützt. Dabei sind Stabilisierungsvorrichtungen bekannt, die sich von dem einen Fahrzeugteil zu dem anderen Fahrzeugteil durchgängig erstrecken. Weitere Anbauelemente können vorgesehen sein, um die Stabilisierungsvorrichtung an die Fahrzeugteile anzubinden. Eine derartige Stabilisierungsvorrichtung ist beispielsweise aus DE 10 2016 201 437 A1 oder DE 10 2010 011 903 B4 bekannt.

Da eine Stabilisierungsvorrichtung Bewegungen mit bis zu sechs Freiheitsgraden standhalten muss, können große Belastungen auf die Stabilisierungsvorrichtung entstehen. Ferner können große Belastungen durch eine große Bewegung zwischen den Fahrzeugteilen entstehen. Dies kann beispielsweise bei engen Kurven auftreten, die die Fahrzeugteile durchfahren.

Eine große Belastung kann zu einer raschen Abnutzung der Leitungen, Teilen der Fahrzeugteile oder der Stabilisierungsvorrichtung führen.

Insgesamt müssen auch Umwelteinflüsse wie Temperaturschwankungen, Wasser, Eis, Verschmutzungen etc. berücksichtigt werden, die gerade bei aufwändigen und komplexen Lösungen für Stabilisierungsvorrichtungen eine erhöhte Abnutzung und kurze Lebensdauer bewirken.

Eine weitere Leitungsführung ist aus EP 3 067 245 A1 bekannt, bei der große Belastungen vermieden werden sollen, indem eine Leitung an einem jeweiligen Fahrzeugteil in einer Schiene zwischen Seiten des Fahrzeugs hin und her bewegbar ist. Eine derartige Bewegbarkeit mittels Schienen ist jedoch nicht für alle Leitungen möglich. Außerdem muss an den Fahrzeugteilen zusätzlicher Bauraum vorgesehen bzw. blockiert werden, der eine Bewegung der Leitungen entlang der Schienen ermöglicht.

Weitere Ausführungsformen von Leitungsführungsanordnungen aus unterschiedlichen Technologiebereichen sind aus DE 10 2005 016 568 A1, JP H04 100775A, EP 2 374 685 A1 und DE 10 2007 051050 A1 bekannt.

Dokument DE 10 2005 016 568 A1 betrifft eine Lösung zur Verlegung einer Notlöseleitung für eine Bremsanlage eines Niederflurfahrzeugs wie einer Straßenbahn zwischen zwei miteinander verbundenen und zueinander beweglichen Fahrzeugteilen. Dazu ist ein horizontal angeordnetes und in vertikaler Richtung steif ausgebildetes Tragelement vorgesehen, das die beiden Fahrzeugteile miteinander verbindet. Das Tragelement kann durch eine Energieführungskette gebildet sein, die die Notlöseleitung zwischen den Fahrzeugteilen in sich aufnimmt und führt, oder durch ein Federstahlband, an dem die Notlöseleitung außenliegend befestigt ist.

JP H04 100775A zeigt eine Vorrichtung zur Führung einer Hochspannungsleitung zwischen zwei Wagen. Diese wird durch zwei an die Wagen beweglich angebundene "terminal bases" realisiert. Das Kabel ist hierbei mittig getrennt und an gleicher Stelle über einen sogenannten "fitting contact" verbunden worden.

Dokument EP 2 374 685 A1 offenbart eine Lösung zur Bereitstellung einer integralen Einheit zwischen einer elektrischen und einer fluidführenden Leitungsanordnung. Dazu sind Anbringungselemente, sogenannte "attachment members" vorgesehen, die die beiden Leitungsanordnungen aneinander koppeln.

DE 10 2007 051050 A1 entstammt dem Bereich des allgemeinen Maschinenbaus und zeigt eine Schutz- und Führungsvorrichtung für ein Kabel an einer Maschine. Diese Vorrichtung ist in geschlossener Bauweise ausgebildet und dazu geeignet, Kabel zwischen einem beweglichen und einem fixen Bauteil zu führen. Besonderes Augenmerk wird in dieser Entgegenhaltung auf die Oberflächenbeschaffenheit der Schutz- und Führungsvorrichtung gelegt, da diese die innenliegenden Leitungen primär vor Hitzeeinwirkung schützen soll.

Um die Belastungen der Leitungen auf ein tragbares Maß zu reduzieren, kann die Bewegbarkeit der Fahrzeugteile zueinander auch eingeschränkt werden. Dies ist jedoch nicht für alle Fahrzeugarten oder Einsatzzwecke möglich.

Es besteht somit ein Bedarf dafür, Leitungen zwischen Fahrzeugteilen derart zu führen, dass nur ein kleiner freier Raum zwischen den Fahrzeugteilen benötigt wird. Ferner soll die Bewegungsfreiheit der Fahrzeugteile zueinander nicht oder nur geringfügig eingeschränkt werden. Ferner soll die Belastung auf die Leitungen gering gehalten werden.

Es ist Aufgabe der vorliegenden Erfindung, eine Leitungsführungsanordnung und ein Fahrzeug der eingangs bezeichneten Art bereitzustellen, welche zumindest eines der vorangehend genannten Probleme lösen.

Diese Aufgabe wird gelöst durch eine einen ersten Aspekt der Erfindung. Dieser betrifft eine Leitungsführungsanordnung für ein Fahrzeug, insbesondere Schienenfahrzeug, zum Führen von zumindest einer Leitung von einem ersten Fahrzeugteil zu einem zweiten Fahrzeugteil, der mit dem ersten Fahrzeugteil gelenkig gekoppelt ist. Die Leitungsführungsanordnung weist eine erste Stabilisierungsvorrichtung, die an dem ersten Fahrzeugteil anbringbar ist, und die zumindest eine Leitung auf. Die erste Stabilisierungsvorrichtung ist in einer ersten Führungsrichtung verformbar und senkrecht zu dieser starr ausgebildet. Weiterhin weist die Stabilisierungsvorrichtung zwischen einem Basiselement und einem Führungselement zumindest ein Stabilisierungselement auf, das die Verformbarkeit der ersten Stabilisierungsvorrichtung bestimmt.

Die erste Stabilisierungsvorrichtung ist mit einem ersten Leitungsabschnitt der Leitung derart gekoppelt, dass die Verformbarkeit der ersten Stabilisierungsvorrichtung eine Bewegung des ersten Leitungsabschnitts in der ersten Führungsrichtung zulässt und senkrecht dazu sperrt. Die Längsachse des zumindest einen Stabilisierungselements ist parallel zu jeweiligen Längsachse der zumindest einen Leitung angeordnet.

Somit kann eine Leitungsführungsanordnung bereitgestellt werden, die einen geringen freien Raum zwischen einem ersten Fahrzeugteil und einem zweiten Fahrzeugteil benötigt. Ferner kann dadurch eine Leitungsführungsanordnung bereitgestellt werden, die in einer bestimmten Richtung, beispielsweise in Schwerkraftrichtung, wenig freien Raum benötigt. Dies wird dadurch erreicht, dass die Stabilisierungsvorrichtung senkrecht zu der Führungsrichtung starr ausgebildet ist. Somit führt eine Kraft der Leitung senkrecht zu der Führungsrichtung - beispielweise aufgrund wirkender Schwerkraft - zu keiner bzw. nahezu keiner Auslenkung der Stabilisierungsvorrichtung. Wirkt jedoch eine Kraft der Leitung in der Führungsrichtung - beispielsweise eine Kraft, die aus der Bewegung der Fahrzeugteile zueinander resultiert - , so kann diese Kraft eine Verformung der Stabilisierungsvorrichtung bewirken. Dadurch ist es möglich, dass sich die Leitungsführungsanordnung an Bewegungen des Fahrzeugs, insbesondere der Fahrzeugteile, anpasst. Die Leitung ist somit zwischen Fahrzeugteilen zuverlässig bei gleichzeitig kleinem Bauraum geführt.

Ferner ermöglicht die Leitungsführungsanordnung eine große Bewegungsfreiheit. Die Stabilisierungsvorrichtung kann eine große Auslenkung in der jeweiligen Führungsrichtung bzw. um eine Drehachse senkrecht dazu vollziehen. Dabei wirkt nur eine geringe Belastung auf die Leitung bzw. die Leitungen.

Gemäß einer Weiterbildung der Erfindung kann vorgesehen sein, dass die erste Stabilisierungsvorrichtung in der ersten Führungsrichtung elastisch verformbar ausgebildet ist. Dies ermöglicht eine Verformbarkeit, bei der eine Rückstellkraft in eine neutrale Position der Stabilisierungsvorrichtung wirkt. Ferner ist die Verformung somit reversibel.

Die erste Stabilisierungsvorrichtung weist zumindest ein Stabilisierungselement auf, das die Verformbarkeit der Stabilisierungsvorrichtung bestimmt. Dadurch ist es möglich, das Stabilisierungselement und dessen Eigenschaften beispielsweise hinsichtlich dessen bevorzugt elastischer Verformbarkeit anhand bestimmter Anforderungen gezielt auszulegen. Die Eigenschaften der Leitungsführungsanordnung können somit mittels des Stabilisierungselements gezielt beeinflusst werden.

Gemäß einer Weiterbildung der Erfindung kann vorgesehen sein, dass das Stabilisierungselement einen im Wesentlichen rechteckigen Querschnitt aufweist. Dabei kann die längere Kante des rechteckigen Querschnitts senkrecht zu der ersten bzw. zweiten Führungsrichtung angeordnet sein. Die längere Kante des rechteckigen Querschnitts kann somit die starre Eigenschaft des Stabilisierungselements vorgeben. Gleichzeitig kann aufgrund der kürzeren Kante das Stabilisierungselement in Richtung der kürzeren Kante verformbar sein. Die Eigenschaften des Stabilisierungselements können auf einfache Weise durch Ändern des Verhältnisses von kürzerer zu längerer Kante des rechteckigen Querschnitts bzw. der Materialstärke in jeweiliger Kantenrichtung angepasst werden.

Gemäß einer Ausgestaltung der Erfindung kann das Stabilisierungselement Stahl, insbesondere Federstahl, Kunststoff, einen Verbundwerkstoff, insbesondere kohlefaserverstärkten Kunststoff, oder eine Kombination daraus umfassen. Stahl ist ein vielseitig einsetzbares und anpassbares Material, das zudem widerstandsfähig ist. Federstahl kann ein besonders großes Verhältnis von Streckgrenze zu Zugfestigkeit des Werkstoffs ermöglichen. Üblicherweise kann dieses Verhältnis im Bereich größer 85 % liegen. Damit kann der Federstahl stark elastisch verformt werden, was einen Einsatz der Leitungsführungsanordnung bei großen Bewegungen verbundener Fahrzeugteile zueinander begünstigt. Ferner kann eine hohe Lebensdauer erreicht werden. Kunststoffe haben den Vorteil eines geringen Gewichts, wobei Verbundwerkstoffe zusätzlich besonders hohe Festigkeiten in zumindest einer Belastungsrichtung aufweisen.

Gemäß einem Aspekt der Erfindung kann vorgesehen sein, dass die erste Stabilisierungsvorrichtung ein Basiselement aufweist, das dazu vorgesehen ist, starr mit dem Fahrzeugteil verbunden zu sein. Die Leitungsführungsanordnung kann somit durch Anpassen des Basiselements an unterschiedliche Anbindungsmöglichkeiten an Fahrzeugteilen angepasst werden. Ferner kann das Basiselement eine Bewegung eines verbundenen Fahrzeugteils auf die entsprechende Stabilisierungsvorrichtung übertragen. Dadurch, dass die Leitung in der Leitungsführungsanordnung und der Stabilisierungsvorrichtung geführt ist, kann eine Belastung von der Leitung genommen werden.

Gemäß einer Weiterbildung der Erfindung kann vorgesehen sein, dass die erste Stabilisierungsvorrichtung ein Führungselement aufweist, das mittels des Stabilisierungselements an dem Basiselement angebracht ist. Dadurch kann das Führungselement frei mit der Leitung in der jeweiligen Führungsrichtung bewegt werden.

Ein Aspekt der Erfindung kann vorsehen, dass der erste Leitungsabschnitt zwischen dem Basiselement und dem Führungselement der ersten Stabilisierungsvorrichtung angeordnet ist. Somit kann der erste Leitungsabschnitt von dem zugehörigen Basiselement und Führungselement in der jeweiligen Führungsrichtung geführt werden.

Eine Ausgestaltung der Erfindung kann vorsehen, dass die erste Stabilisierungsvorrichtung zumindest ein Aufnahmeelement aufweist, das die Leitung in der Stabilisierungsvorrichtung lagert. Das Aufnahmeelement kann somit beispielsweise als Art Zwischenglied zwischen der Leitung und der Stabilisierungsvorrichtung dienen. Weist eine Leitung einen bestimmten Querschnitt auf, so kann es ausreichend sein, lediglich das Aufnahmeelement entsprechend anzupassen, ohne die Stabilisierungsvorrichtung anpassen zu müssen. Insgesamt kann somit eine hohe Flexibilität erreicht werden.

Eine Weiterbildung davon kann vorsehen, dass das Aufnahmeelement die Leitung fest mit der Stabilisierungsvorrichtung verbindet. Dies bewirkt, dass die Bewegung der Leitung an die Bewegung der Stabilisierungsvorrichtung im Bereich des Aufnahmeelements gekoppelt ist. Somit kann ein Spiel zwischen den Leitung und Leitungsführungsanordnung im Bereich des Aufnahmeelements vermieden werden.

Gemäß einem Aspekt der Erfindung kann vorgesehen sein, dass das Aufnahmeelement eine Bewegung der Leitung relativ zu der Stabilisierungsvorrichtung in einer Längenrichtung der Leitung zulässt und/oder eine Rotation der Leitung um eine Längenrichtung der Leitung relativ zu der Stabilisierungsvorrichtung zulässt. Darüber hinaus können auch weitere Freiheitsgrade ermöglicht werden.

Ferner kann gemäß einem Aspekt der Erfindung vorgesehen sein, dass das Aufnahmeelement fünf Freiheitsgrade der Leitung relativ zu der ersten Stabilisierungsvorrichtung ermöglicht, während der sechste Freiheitsgrad mit der Richtung senkrecht zu der zugehörigen Führungsrichtung zusammenfällt und gesperrt ist.

Darüber hinaus kann gemäß einer Ausgestaltung der Erfindung vorgesehen sein, dass die erste Stabilisierungsvorrichtung fünf Freiheitsgrade der Leitung relativ zu der Stabilisierungsvorrichtung ermöglicht, während der sechste Freiheitsgrad mit der Richtung senkrecht zu der zugehörigen Führungsrichtung zusammenfällt und gesperrt ist. Somit kann die Stabilisierungsvorrichtung genau einen Freiheitsgrad sperren. Somit kann ein geringer Bauraumbedarf in Richtung des gesperrten Freiheitsgrads erreicht werden. Gleichzeitig kann eine Bewegungsfreiheit der Leitung in den anderen Freiheitsgraden erreicht werden. Die Leitungsführungsanordnung kann somit eine große Bewegungsfreiheit miteinander gekoppelter Fahrzeugteile ermöglichen. Trotz des eingeschränkten sechsten Freiheitsgrads kann dennoch aufgrund des freien Leitungsabschnitts zwischen den Stabilisierungsvorrichtungen ein gewisses Maß an Bewegung in Richtung des sechsten Freiheitsgrads ermöglicht werden, was somit eine Bewegung der Leitung im freien Leitungsabschnitt bei Bewegung gekoppelter Fahrzeugteile in Richtung des sechsten Freiheitsgrads ermöglicht.

Es kann in einer Weiterbildung der Erfindung vorgesehen sein, dass das Aufnahmeelement zumindest einen Freiheitsgrad der Leitung relativ zu der ersten Stabilisierungsvorrichtung bis zu einem gewissen Ausmaß zulässt. Somit können bestimmte Bewegungen der Leitung relativ zu der ersten Stabilisierungsvorrichtung ermöglicht werden. Darüber hinausgehende Bewegungen sind jedoch an die Verformbarkeit der Stabilisierungsvorrichtung bzw. der Leitungsführungsanordnung insgesamt gekoppelt. Damit können Spannungsspitzen in der Leitung reduziert werden. Ferner kann eine Beanspruchung der Leitung und der Leitungsführungsanordnung reduziert werden.

Gemäß einer Ausgestaltung der Erfindung kann vorgesehen sein, dass das Aufnahmeelement einen innenliegenden Bereich aufweist, der die Leitung lagert, wobei bevorzugt ein Innendurchmesser des innenliegenden Bereichs in zumindest eine Richtung entlang der Leitung zumindest teilweise zunimmt. Somit kann der innenliegende Bereich trompetenförmig ausgebildet sein. Dadurch kann ein Knickschutz für die Leitung erreicht werden. Die Leitung kann in einem vergleichsweise kleinen Bereich an das Aufnahmeelement gekoppelt sein. Ferner kann ein sanfter Übergang zwischen einem mit dem Aufnahmeelement gekoppelten Bereich und einem nicht mit dem Aufnahmeelement gekoppelten Bereich der Leitung erreicht werden. Spannungsspitzen auf die Leitung können somit reduziert oder gar vermieden werden.

Gemäß einer Weiterbildung der Erfindung kann vorgesehen sein, dass die erste Stabilisierungsvorrichtung ein erstes derartiges Aufnahmeelement, das die Leitung in dessen Basiselement lagert, und/oder ein zweites derartiges Aufnahmeelement aufweist, das die Leitung in dessen Führungselement lagert. Somit kann erreicht werden, dass die Leitung in dem Basiselement und dem Führungselement einer der Stabilisierungsvorrichtungen in der Leitungsführungsanordnung gelagert ist. Dabei kann vorgesehen sein, dass beide Aufnahmeelemente gleich ausgebildet sind. Alternativ können die Aufnahmeelemente auch unterschiedlich ausgebildet sein. Beispielsweise kann für das Basiselement ein Aufnahmeelement gewählt werden, das die Leitung fest lagert, und für das Führungselement ein Aufnahmeelement, das Bewegung der Leitung relativ zu der Stabilisierungsvorrichtung in einer Längenrichtung der Leitung zulässt und/oder eine Rotation der Leitung um eine Längenrichtung der Leitung relativ zu der Stabilisierungsvorrichtung zulässt und/oder einen anderen Freiheitsgrad zumindest bis zu einem bestimmten Ausmaß zulässt.

Gemäß einem Aspekt der Erfindung kann vorgesehen sein, dass eine Längsachse des ersten Leitungsabschnitts im Wesentlichen senkrecht zu der ersten Führungsrichtung angeordnet ist. Insbesondere kann dann vorgesehen sein, dass ein Aufnahmeelement vorgesehen ist, das zumindest einen Freiheitsgrad der Leitung ermöglicht. So können durch den Freiheitsgrad Bewegungen kompensiert werden.

Gemäß einer Weiterbildung der Erfindung kann vorgesehen sein, dass eine Längsachse des Stabilisierungselements der ersten Stabilisierungsvorrichtung im Wesentlichen senkrecht zu der ersten Führungsrichtung angeordnet ist.

Gemäß einem Aspekt der Erfindung kann vorgesehen sein, dass die Leitung eine elektrische Leitung oder ein Medienschlauch zum Führen eines Mediums, beispielsweise ein Hydraulikschlauch oder ein Pneumatikschlauch, ist.

Ferner kann vorgesehen sein, dass die Leitungen der Leitungsführungsanordnung unterschiedlicher Art sind. Eine erste Leitung kann beispielsweise eine elektrische Leitung sein, während eine zweite Leitung ein Pneumatikschlauch ist.

Außerdem kann vorgesehen sein, dass die Leitungen der Leitungsführungsanordnung unterschiedliche Dimensionen und/oder unterschiedliche Querschnittsgeometrien und/oder unterschiedliche Materialien und/oder unterschiedliche Elastizitäten aufweisen.

Es kann vorgesehen sein, dass zumindest eine der Leitungen einen runden, insbesondere kreisrunden, ovalen, dreieckigen, viereckigen, bevorzugt rechteckigen oder quadratischen, oder vieleckigen Querschnitt aufweist.

Eine Weiterbildung der Erfindung sieht vor, dass die erste Stabilisierungsvorrichtung zwei, drei, vier oder mehr Stabilisierungselemente aufweist.

Gemäß einer Ausgestaltung der Erfindung kann vorgesehen sein, dass die erste Stabilisierungsvorrichtung zumindest zwei Stabilisierungselemente aufweist, deren Längsachsen eine Ebene aufspannen, die senkrecht zu der Führungsrichtung angeordnet ist. Dies ermöglicht einen geringen Bauraumbedarf senkrecht zu dieser Ebene.

Gemäß einer Ausführungsform der Erfindung kann vorgesehen sein, dass die erste Stabilisierungsvorrichtung zumindest zwei Stabilisierungselemente aufweist, deren Längsachsen senkrecht zu der zugehörigen Führungsrichtung angeordnet sind.

Gemäß einer Ausgestaltung der Erfindung kann vorgesehen sein, dass die Leitung zumindest im Bereich der ersten Stabilisierungsvorrichtung eine Hülle, bevorzugt im Bereich des Basiselements und/oder Führungselements, besonders bevorzugt im Bereich zumindest eines Aufnahmeelements, aufweist, die die Leitung zumindest teilweise umgibt. Dadurch kann ein zusätzlicher Schutz für die Leitung erreicht werden, der beispielsweise ein Knickschutz sein kann.

Gemäß einer Weiterbildung der Erfindung kann vorgesehen sein, dass an dem Basiselement der ersten Stabilisierungsvorrichtung eine Anschlussvorrichtung ausgebildet ist. Diese ermöglicht es, einen Bereich der Leitung, der sich entlang der Leitungsführungsanordnung erstreckt, mit einer Leitung des ersten Fahrzeugteils zu verbinden. Somit kann eine einfache Installation der Leitungsführungsanordnung an dem Fahrzeug bereitgestellt werden.

Gemäß einer Weiterbildung der Erfindung kann vorgesehen sein, dass die Leitungsführungsanordnung ferner zweite Stabilisierungsvorrichtung umfasst, die an dem zweiten Fahrzeugteil anbringbar ist. Die zweite Stabilisierungsvorrichtung ist in einer zweiten Führungsrichtung verformbar und senkrecht zu dieser starr ausgebildet. Die zweite Stabilisierungsvorrichtung ist mit einem zweiten Leitungsabschnitt der Leitung derart gekoppelt, dass die Verformbarkeit der zweiten Stabilisierungsvorrichtung eine Bewegung des zweiten Leitungsabschnitts in der zweiten Führungsrichtung zulässt und senkrecht dazu sperrt. Durch die zweite Stabilisierungsvorrichtung kann eine Leitungsführungsanordnung mit verbesserter Stabilität und verbesserten Führungseigenschaften erreicht werden. Außerdem kann die Anbindung an Fahrzeugteile erleichtert werden.

Es versteht sich, dass einzelne Merkmale, Ausgestaltungen, Vorteile und/oder Eigenschaften, die im Zusammenhang mit der ersten Stabilisierungsvorrichtung bzw. allgemein für eine Stabilisierungsvorrichtung erläutert sind, analog für die zweite Stabilisierungsvorrichtung Anwendung finden können, auch wenn diese nicht explizit ausgeführt sind. Im Folgenden sind lediglich einige Merkmale im Zusammenhang mit der zweiten Stabilisierungsvorrichtung genannt.

Eine Weiterbildung der Erfindung kann vorsehen, dass ein freier Leitungsabschnitt der Leitung die erste und die zweite Stabilisierungsvorrichtung miteinander koppelt. Dadurch kann in vorteilhafter Weise erreicht werden, dass sich die Leitung im Bereich des freien Leitungsabschnitts frei bewegen kann. Dies hat ferner zum Vorteil, dass die Leitungsführungsanordnung sich im Bereich des freien Leitungsabschnitts aufgrund der Eigenschaften der Leitung flexibel verformen und damit große Bewegungen ermöglichen kann. Gleichzeitig kann insgesamt eine geringe Beanspruchung der Stabilisierungsvorrichtungen erreicht werden. Außerdem kann eine Belastung der Leitung im Bereich des freien Leitungsabschnitts vermieden werden, sodass auch Verschleiß an der Leitung vermieden werden kann. Insgesamt kann die Leitung somit in den jeweiligen Führungsrichtungen zumindest teilweise geführt werden, wobei jedoch im Bereich des freien Leitungsabschnitts auch Bewegungen senkrecht zu den jeweiligen Führungsrichtungen abgebildet bzw. zugelassen werden können. Das Widerstandsmoment der Leitung kann dazu beitragen, dass im Bereich des freien Leitungsabschnitts die Schwerkraft nur eine geringe Auswirkung auf die Leitung bzw. deren Verformung in Richtung der Schwerkraft bzw. senkrecht zu zumindest einer der Führungsrichtungen hat.

Ein Aspekt der Erfindung kann vorsehen, dass der zweite Leitungsabschnitt zwischen dem Basiselement und dem Führungselement der zweiten Stabilisierungsvorrichtung angeordnet ist. Somit kann der zweite Leitungsabschnitt von dem zugehörigen Basiselement und Führungselement in der jeweiligen Führungsrichtung geführt werden.

Gemäß einem Aspekt der Erfindung kann vorgesehen sein, dass eine Längsachse des zweiten Leitungsabschnitts im Wesentlichen senkrecht zu der zweiten Führungsrichtung angeordnet ist.

Gemäß einer Weiterbildung der Erfindung kann vorgesehen sein, dass eine Längsachse des Stabilisierungselements der zweiten Stabilisierungsvorrichtung im Wesentlichen senkrecht zu der zweiten Führungsrichtung angeordnet ist.

Außerdem wird die erfindungsgemäße Aufgabe durch ein Fahrzeug gelöst, das einen ersten Fahrzeugteil, einen zweiten Fahrzeugteil, der mit dem ersten Fahrzeugteil gelenkig gekoppelt ist, und zumindest eine Leitungsführungsanordnung der vorangehend beschriebenen Art aufweist. Die erste Stabilisierungsvorrichtung ist an dem ersten Fahrzeugteil angeordnet. Die Leitung führt von dem ersten Fahrzeugteil zu dem zweiten Fahrzeugteil.

Ferner wird die erfindungsgemäße Aufgabe durch ein Fahrzeug gelöst, das einen ersten Fahrzeugteil, einen zweiten Fahrzeugteil, der mit dem ersten Fahrzeugteil gelenkig gekoppelt ist, und zumindest eine Leitungsführungsanordnung der vorangehend beschriebenen Art aufweist. Die erste Stabilisierungsvorrichtung ist an dem ersten Fahrzeugteil und die zweite Stabilisierungsvorrichtung an dem zweiten Fahrzeugteil angeordnet. Die Leitung führt von dem ersten Fahrzeugteil zu dem zweiten Fahrzeugteil.

Auf diese Weise wird ein Fahrzeug erreicht, bei dem eine Leitung oder mehrere Leitungen von dem ersten zu dem zweiten Fahrzeugteil zuverlässig geführt werden können, auch wenn die Fahrzeugteile miteinander gelenkig gekoppelt sind. Durch die Leitungsführungsanordnung kann das Fahrzeug auch große Bewegungen der Fahrzeugteile zueinander realisieren. Dies gilt insbesondere für Bewegungen des Fahrzeugteils um eine Drehachse senkrecht zu den oder einer der Führungsrichtungen.

Gleichzeitig können Leitungen zwischen Fahrzeugteilen bei einem Fahrzeug geführt werden, das nur geringen freien Raum zwischen den Fahrzeugteilen, insbesondere in Richtung senkrecht zu einer der Führungsrichtungen, aufweist.

Außerdem kann ein Fahrzeug erreicht werden, das keine oder zumindest eine lediglich geringe Belastung auf die Leitung zwischen den Fahrzeugteilen ausübt.

Eine Weiterbildung der Erfindung kann vorsehen, dass die Fahrzeugteile um eine Drehachse drehbar miteinander gekoppelt sind und die Drehachse im Wesentlichen senkrecht zu der ersten Führungsrichtung und/oder zweiten Führungsrichtung angeordnet ist. Dies kann insbesondere auf einen Zustand zutreffen, bei dem sich die Fahrzeugteile in einer neutralen Position zueinander befinden und/oder lediglich um die Drehachse zueinander verschwenkt sind. Es kann somit ein Fahrzeug erreicht werden, das keine oder lediglich eine geringe Belastung der Leitung bzw. der Leitungen im Bereich zwischen den Fahrzeugteilen ermöglicht. Eine drehbare Kopplung der Fahrzeugteile kann ein sogenanntes Jaboksdrehgestell oder eine Kupplung sein, ist jedoch nicht darauf beschränkt.

Eine Weiterbildung der Erfindung kann vorsehen, dass die erste und die zweite Führungsrichtung in einer neutralen Position der Fahrzeugteile zueinander in einer gemeinsamen Ebene angeordnet sind und/oder senkrecht zueinander angeordnet sind.

Eine Ausgestaltung der Erfindung kann vorsehen, dass die erste Stabilisierungsvorrichtung derart an dem ersten Fahrzeugteil und die zweite Stabilisierungsvorrichtung derart an dem zweiten Fahrzeugteil angeordnet sind, dass in neutraler Stellung der beiden Fahrzeugteile zueinander eine Längsachse des ersten Leitungsabschnitts mit einer Längsachse des zweiten Leitungsabschnitts einen Winkel einschließt. Bevorzugt ist der Winkel im Bereich von 45 bis 135 Grad. Besonders bevorzugt beträgt der Winkel im Wesentlichen 90 Grad. Somit kann erreicht werden, dass die Leitungsführungsanordnung eine große Bewegungsfreiheit der Fahrzeugteile zueinander ermöglicht. Gleichzeitig ist die Belastung der Leitung gering. Ferner kann ein Fahrzeug erreicht werden, das lediglich einen geringen Bauraum zwischen den Fahrzeugteilen benötigt zum Führen der Leitung bzw. der Leitungen von dem ersten Fahrzeugteil zu dem zweiten Fahrzeugteil.

Gemäß einem Aspekt der Erfindung kann vorgesehen sein, dass die erste Stabilisierungsvorrichtung derart an dem ersten Fahrzeugteil und die zweite Stabilisierungsvorrichtung derart an dem zweiten Fahrzeugteil angeordnet sind, dass in einer neutralen Stellung der beiden Fahrzeugteile zueinander zumindest eine der Stabilisierungsvorrichtungen ebenfalls in einer neutralen Stellung ist.

Es kann gemäß einer Ausgestaltung der Erfindung ferner vorgesehen sein, dass eine Länge des ersten Leitungsabschnitts und/oder eine Länge des zweiten Leitungsabschnitts kleiner ist als eine Länge des freien Leitungsabschnitts. Die Länge des freien Leitungsabschnitts kann mehr als doppelt so groß sein wie die Länge des ersten Leitungsabschnitts und/oder zweiten Leitungsabschnitts.

Es sei angemerkt, dass in Fällen, in denen lediglich eine Leitung der Leitungsführungsanordnung erwähnt ist, die Ausführungen, Merkmale und/oder Ausgestaltungen auch für den Fall zutreffen, dass mehrere Leitungen in der Leitungsführungsanordnung vorgesehen sind. Es versteht sich, dass, wenn für eine Leitung beispielsweise ein oder mehrere Aufnahmeelemente vorgesehen sind, auch für eine andere Leitung der Leitungsführungsanordnung ein oder mehrere Aufnahmeelemente vorgesehen sein können.

Mit der Richtung senkrecht zu der Führungsebene kann eine Richtung gemeint sein, die auch zu einer Längsachse des ersten und/oder zweiten Stabilisierungselements und/oder einer Längsachse des ersten und/oder zweiten Leitungsabschnitts angeordnet ist.

Auch wenn Details nur in Bezug auf die Leitungsführungsanordnung beschrieben wurden/sind, so können diese Details in entsprechender Weise in dem Fahrzeug mit der Leitungsführungsanordnung realisiert sein/werden. Ebenso können in Bezug auf das Fahrzeug mit der Leitungsführungsanordnung beschriebene Details in entsprechender Weise in der Leitungsführungsanordnung realisiert sein/werden.

Auch wenn im Zusammenhang mit der Leitungsführungsanordnung ein Fahrzeug genannt ist bzw. Fahrzeugteile genannt sind, ist die Erfindung nicht darauf beschränkt. Fahrzeug kann durch "mehrteiliger Gegenstand" ersetzt werden, "erster Fahrzeugteil" durch "erster Teil des mehrteiligen Gegenstands" und "zweiter Fahrzeugteil" durch "zweiter Teil des mehrteiligen Gegenstands".

Die Erfindung wird im Folgenden beispielhaft anhand der beiliegenden Figuren erläutert. Es stellen dar:
- Fig. 1: eine schematische Darstellung einer Leitungsführungsanordnung;
- Fig. 2: einen Ausschnitt einer Draufsicht auf eine schematische Darstellung eines Fahrzeugs mit einer Leitungsführungsanordnung;
- Fig. 3: eine schematische Darstellung einer ersten Anordnung von Führungselementen und Leitungen;
- Fig. 4: eine schematische Darstellung einer zweiten Anordnung von Führungselementen und Leitungen;
- Fig. 5: eine schematische Darstellung einer dritten Anordnung von Führungselementen und Leitung;
- Fig. 6: eine schematische Darstellung einer vierten Anordnung von Führungselementen und Leitung; und
- Fig. 7: eine schematische Darstellung eines Fahrzeugs mit einer Leitungsführungsanordnung.

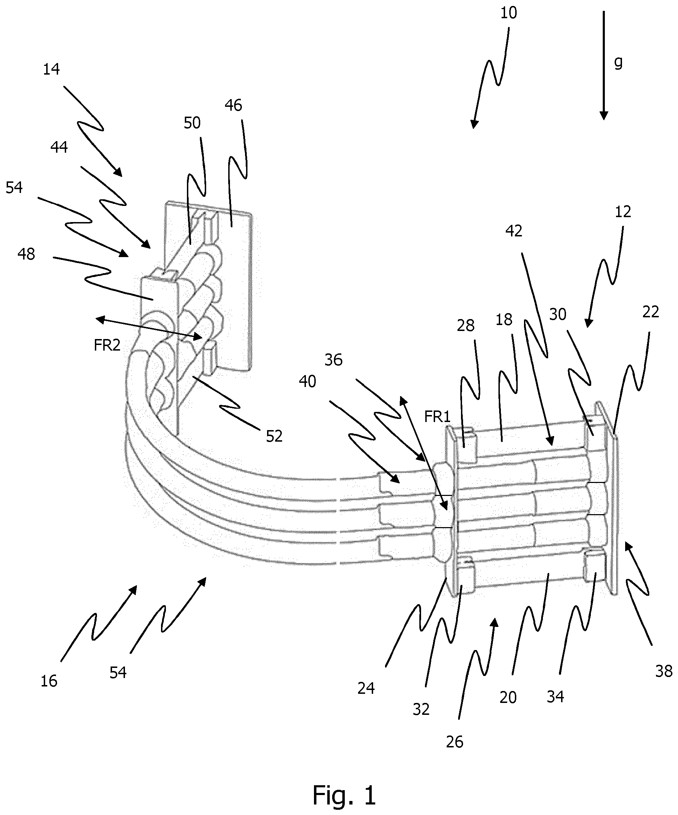

Figur 1 zeigt eine schematische Darstellung einer Leitungsführungsanordnung 10. Die Leitungsführungsanordnung weist eine erste Stabilisierungsvorrichtung 12 und eine zweite Stabilisierungsvorrichtung 14 auf. Ferner weist die Leitungsführungsanordnung 10 Leitungen 16 auf, die von der ersten Stabilisierungsvorrichtung 12 zu der zweiten Stabilisierungsvorrichtung 14 führen.

Die erste Stabilisierungsvorrichtung 12 weist ein erstes und ein zweites Stabilisierungselement 18, 20 auf, die sich ausgehend von einem Basiselement 22 der ersten Stabilisierungsvorrichtung 12 zu einem Führungselement 24 der ersten Stabilisierungsvorrichtung 12 erstrecken. Die beiden Stabilisierungselemente 18, 20 weisen einen Querschnitt mit einer Rechteckform auf. Ferner sind beiden Stabilisierungselemente 18, 20 mit im Wesentlichen konstanter Dicke ausgebildet. Die längere Seite des Querschnitts der Rechteckform ist senkrecht zu der ersten Führungsrichtung FR1 angeordnet.

Das erste und das zweite Stabilisierungselement 18, 20 weisen ferner jeweils eine Längsachse auf, die zueinander parallel angeordnet sind. Ferner sind die Längsachsen des ersten und des zweiten Stabilisierungselements 18, 20 parallel zu jeweiligen Längsachsen der Leitungen 16 in der ersten Stabilisierungsvorrichtung 12 angeordnet.

Zwischen dem Basisteil 22 und dem Führungsteil 24 befindet sich jeweils ein erster Leitungsabschnitt 26 der Leitungen 16.

Die Leitungen 16 führen bezogen auf die erste Stabilisierungsvorrichtung 12 von dem Basiselement 22 zu dem Führungselement 24. Genauer gesagt führen die Leitungen 16 durch das Basiselement 22 und das Führungselement 24 durch entsprechende Aussparungen.

Aus Gründen der Einfachheit ist dargestellt, dass die Leitungen 16 nicht über die Basisteile der jeweiligen Stabilisierungsvorrichtung 12, 14 hinausreichen. Dabei können die Leitungen 16 tatsächlich auch über die Basisteile hinaus verlaufen. Zudem oder alternativ können jeweilige Anschlüsse an den Basisteilen ausgebildet sein, um die Leitungen 16 mit an den Fahrzeugteilen vorhandenen Leitungen zu koppeln. Dabei kann auch vorgesehen sein, dass die Basiselemente selbst Teil eines Anschlusses sein.

Die Stabilisierungselemente 18, 20 der ersten Stabilisierungsvorrichtung 12 sind mittels jeweiligen Halterungen 28, 30, 32, 34 an dem Basiselement 22 und dem Führungselement 24 der ersten Stabilisierungsvorrichtung 12 befestigt. Die Halterungen 28, 30, 32, 34 weisen vorliegend Klemmbacken auf, die das jeweilige Stabilisierungselement 18, 20 aufnehmen und einen einfachen Austausch der Stabilisierungselemente 18, 20 ermöglichen.

Figur 1 ist ferner zu entnehmen, dass die Leitungen 16 jeweils an dem Führungselement 24 der ersten Stabilisierungsvorrichtung 12 über erste Aufnahmeelemente 36 mit dem Führungselement 24 verbunden sind. Auch sind die Leitungen 16 jeweils an dem Basiselement 22 der ersten Stabilisierungsvorrichtung 12 über zweite Aufnahmeelemente 38 mit dem Führungselement 24 verbunden. Vorliegend lagern die Leitungen 16 mittels der ersten Aufnahmeelemente 36 fest in dem Führungselement 24 und die zweiten Aufnahmeelemente 38 fest in dem Basiselement 22. Die Aufnahmeelemente 36, 38 können jedoch auch einzelne Freiheitsgrade der Leitungen relativ zu dem Basiselement 22 bzw. Führungselement 24 zumindest bis zu einem gewissen Ausmaß freigeben.

Die Leitungen 26 weisen im Bereich der ersten Aufnahmeelemente 36 erste Hüllen 40 und im Bereich der zweiten Aufnahmeelemente 38 zweite Hüllen 42 auf. Die Hüllen 40, 42 dienen dem Schutz der Leitungen 16. Die Hüllen 40, 42 können jedoch auch eine gewisse Steifigkeit aufweisen, sodass durch die Hüllen ein Knickschutz erzielt werden kann. Die Steifigkeit kann in zumindest eine bestimmte Richtung der Hülle reduziert sein. So weisen beispielsweise die ersten Hüllen 40 an deren Unterseite jeweils Aussparungen auf, die dazu dienen, eine Bewegung der jeweiligen Leitung 16 in Richtung der Unterseite zu erleichtern.

Es ist erkennbar, dass die erste Stabilisierungsvorrichtung 12 aufgrund der wie oben beschriebenen baulichen Ausgestaltung eine Bewegung des Führungselements 24 in der ersten Führungsrichtung FR1 relativ zu dem Basiselement 22 zulässt. Dazu trägt die geringe Dicke der beiden Stabilisierungselemente 18, 20 in Richtung der ersten Führungsrichtung FR1 bei. Hingegen wird eine Bewegung senkrecht zu der ersten Führungsrichtung FR1 gesperrt. Dazu trägt die Höhe der beiden Stabilisierungselemente 18, 20 in Richtung senkrecht zu der ersten Führungsrichtung FR1 bei.

Eine Bewegung der Leitungen 16 im Bereich zwischen den Stabilisierungsvorrichtungen 12, 14 und des Führungselements 24 in eine Richtung senkrecht zu der Führungsrichtung FR1 kann sich aus der Schwerkraft g ergeben, die in Fig. 1 exemplarisch senkrecht zu der ersten Führungsrichtung FR1 wirkt. Diese Ausrichtung gegenüber der Schwerkraft gilt insbesondere dann, wenn die Leitungsführungsanordnung 10 an einem Fahrzeug angebracht ist, das sich in der Ebene befindet. Bei Steigungen der Fahrbahn können die Richtung der Schwerkraft g und die Richtung senkrecht zu der ersten Führungsrichtung FR1 auseinander laufen.

Die zweite Stabilisierungsvorrichtung 14 ist analog zur ersten Stabilisierungsvorrichtung 12 aufgebaut. Im Folgenden wird daher nicht alle Teile erneut eingegangen, sondern es wird nur auf einige Teile bzw. auf spezielle Aspekte des Aufbaus eingegangen.

Ein zweiter Leitungsabschnitt 44 der Leitungen 16 erstreckt sich zwischen einem Basiselement 46 und einem Führungselement 48 der zweiten Stabilisierungsvorrichtung 14. Im Bereich des zweiten Leitungsabschnitts 44 erstrecken sich auch ein erstes Stabilisierungselement 50 und ein zweites Stabilisierungselement 52 der zweiten Stabilisierungsvorrichtung 14.

Das Führungselement 48 der zweiten Stabilisierungsvorrichtung 14 ist aufgrund der elastischen Verformbarkeit der zweiten Stabilisierungsvorrichtung 14 in einer zweiten Führungsrichtung FR2 relativ zu dem Basiselement 46 der zweiten Stabilisierungsvorrichtung 14 bewegbar bzw. verschwenkbar. Senkrecht zu der zweiten Führungsrichtung FR2 ist das zweite Führungselement 48 nicht entsprechend verschwenkbar, sondern starr.

Mit der zweiten Stabilisierungsvorrichtung 14 wird im Fall eines Verschwenkens in der zweiten Führungsrichtung FR2 der zweite Leitungsabschnitt 44 ebenfalls in der zweiten Führungsrichtung FR2 verschwenkt.

Es sei angemerkt, dass die jeweiligen Führungselemente 24, 48 bei ihrer Verschwenkung relativ zu den jeweiligen Basiselementen 22, 46 in eine Richtung schwenken, die sich aus deren Verschwenkbewegung ergibt. Diese Richtung wird als erste bzw. zweite Führungsrichtung FR1, FR2 bezeichnet, unabhängig von einer genauen Höhenposition der Führungsrichtungen FR1, FR2.

Zwischen der ersten Stabilisierungsvorrichtung 12 und der zweiten Stabilisierungsvorrichtung 14 ist ein freier Leitungsabschnitt 54 angeordnet.

Die Leitungen 16 führen somit ausgehend von der ersten Stabilisierungsvorrichtung 12 von dessen Basiselement 22 entlang des ersten Leitungsabschnitts 26 durch das Führungselement 24, entlang des freien Leitungsabschnitts 54 zu der zweiten Stabilisierungsvorrichtung 14 durch dessen Führungselement 48 entlang des zweiten Leitungsabschnitts 44 zu dem Basiselement 46 bzw. durch dieses hindurch.

Wie Figur 1 zu entnehmen ist, sind die Leitungen 16 gekrümmt. Eine Längsachse des ersten Leitungsabschnitts 26 ist somit in einem Winkel zu einer Längsachse des zweiten Leitungsabschnitts 44 angeordnet.

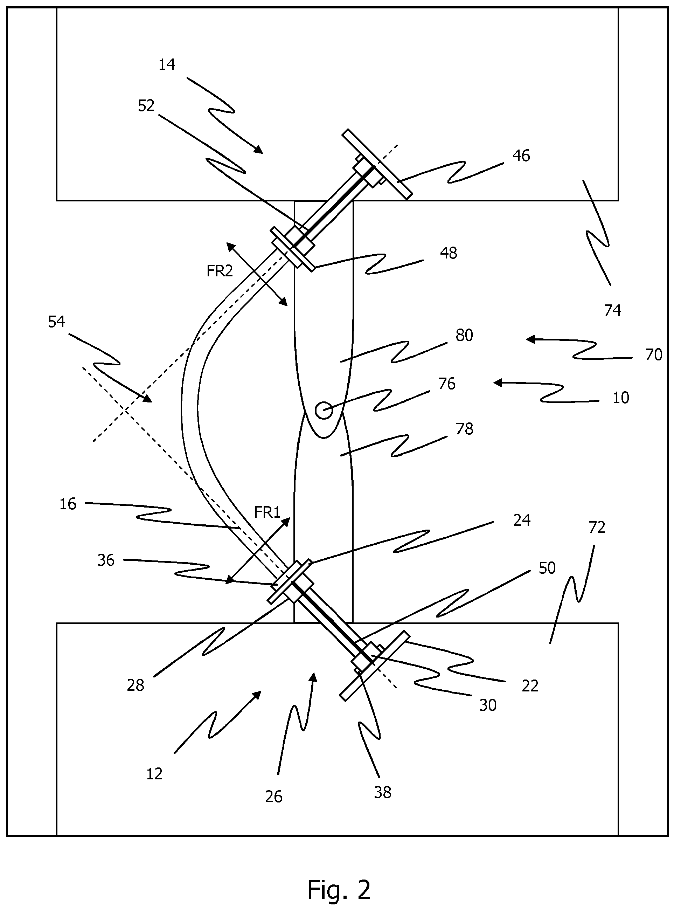

Figur 2 zeigt einen Ausschnitt einer Draufsicht auf eine schematische Darstellung eines Fahrzeugs 70 mit einer Leitungsführungsanordnung 10. Das Fahrzeug weist einen ersten Fahrzeugteil 72 und einen zweiten Fahrzeugteil 74 auf, wobei der erste Fahrzeugteil 72 mit dem zweiten Fahrzeugteil 74 über ein Gelenk 76 gekoppelt ist. Das Gelenk 76 verbindet jeweilige Befestigungsvorrichtungen 78, 80 der Fahrzeugteile 72, 74. Das Gelenk 76 weist eine Drehachse auf, die in Richtung der Bildebene verläuft. Bezogen auf die beiden Fahrzeugteile 72, 74 verläuft die Drehachse somit in einer Höhenrichtung des Fahrzeugs 70. Die erste Stabilisierungsvorrichtung 12 ist an dem ersten Fahrzeugteil 72 und die zweite Stabilisierungsvorrichtung 14 ist an dem zweiten Fahrzeugteil 74 angebracht.

Die erste Stabilisierungsvorrichtung 12 ist mittels dessen Basiselements 22 starr mit dem ersten Fahrzeugteil 72 verbunden. Die Leitungen 16 sind mit dem Basiselement 22 über die jeweiligen zugehörigen ersten Aufnahmeelemente 38 verbunden, die in der gezeigten Darstellung von der Halterung 30 zumindest teilweise verdeckt sind.

Die Leitungen 16 erstrecken sich entlang des ersten Leitungsabschnitts 26 bis zu dem Führungselement 24 der ersten Stabilisierungsvorrichtung 12. Auch das erste Stabilisierungselement 18 erstreckt sich von dem Basiselement 22 zu dem Führungselement 24 der ersten Stabilisierungsvorrichtung 12, ist jedoch mittels den jeweiligen Halterungen 28, 30 an dem Basiselement 22 und dem Führungselement 24 der ersten Stabilisierungsvorrichtung 12 befestigt. Zwischen dem Basiselement 22 und dem Führungselement 24 erstreckt sich der erste Leitungsabschnitt 26.

Die Leitungen 16 liegen in der vorliegenden Ansicht übereinander, sodass nur die oberste Leitung sichtbar ist.

Das Führungselement 24 der ersten Stabilisierungsvorrichtung 12 ist mit den Leitungen über die jeweiligen zweiten Aufnahmeelemente 36 verbunden. Darüber hinaus ist das Führungselement 24 in der ersten Führungsrichtung FR1 verschwenkbar.

Zwischen der ersten Stabilisierungsvorrichtung 12 und der zweiten Stabilisierungsvorrichtung 14 ist der freie Leitungsabschnitt 54 angeordnet. Er beschreibt den Teil der Leitungen 16 zwischen den Stabilisierungsvorrichtungen 12, 14.

Die zweite Stabilisierungsvorrichtung 14 der Figur 2 ist auch im Wesentlichen gleich wie die erste Stabilisierungsvorrichtung 12 aufgebaut. Daher wird auf den Aufbau der ersten Stabilisierungsvorrichtung 12 verwiesen.

Aus Figur 2 ist zu entnehmen, dass in der neutralen Stellung der beiden Fahrzeugteile 72, 74 zueinander eine Längsachse des ersten Leitungsabschnitts 26 in einem Winkel zu einer Längsachse des zweiten Leitungsabschnitts 44 angeordnet ist, wobei der Winkel etwa 90 Grad beträgt. Wie der Figur 2 weiter zu entnehmen ist, hängt der Winkel in der neutralen Position davon ab, in welcher Ausrichtung die jeweiligen Basiselemente 22, 46 an den jeweiligen Fahrzeugteilen 72, 74 angebracht sind. Mit der Ausrichtung kann eingestellt werden, wie stark die Leitungen 16 bei einer relativen Bewegung der Fahrzeugteile 72, 74 zueinander gekrümmt werden.

Der Abstand und der vorhandene Raum zwischen den beiden Fahrzeugteilen 72, 74 ist in Figur 2 beispielhaft gezeigt. Der Abstand zwischen den beiden Fahrzeugteilen 72, 74 könnte auch deutlich geringer oder größer sein, wobei ein Führen von Leitungen von dem ersten Fahrzeugteil 72 zu dem zweiten Fahrzeugteil 74 trotzdem möglich wäre. Selbiges gilt für einen kleineren oder größeren vorhandenen Raum zwischen den beiden Fahrzeugteilen 72, 74.

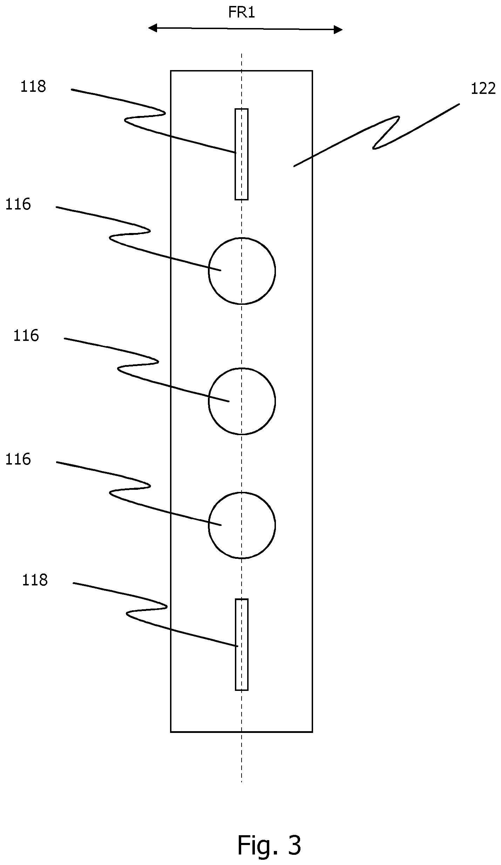

Figur 3 zeigt eine schematische Darstellung einer ersten Anordnung der Führungselemente 118 und der Leitungen 116 bezogen auf das Basiselement 122, wobei von den Leitungen 116 und den Führungselementen 118 lediglich die Querschnittsformen schematisch dargestellt sind und auf das Basiselement 122 projiziert sind. Die Mittelpunkte der Querschnitte der Leitungen 116 und der Stabilisierungselemente 118 liegen auf einer gemeinsamen Achse. Die gemeinsame Achse ist bezogen auf das Basiselement 122 mittig angeordnet. Ferner ist die erste Führungsrichtung FR1 exemplarisch dargestellt, um zu verdeutlichen, in welche Richtung eine elastische Verformung der ersten Stabilisierungsvorrichtung gemäß der ersten Anordnung zugelassen ist. Die starre Richtung der Stabilisierungselemente 118 ist senkrecht zu der Führungsrichtung FR1 ausgebildet.

Vorlegend sind drei Leitungen 116 dargestellt, wobei auch lediglich eine, zwei, vier Leitungen 116 vorgesehen sein könnten. Ferner könnte auch lediglich ein Stabilisierungselement insbesondere oberhalb oder unterhalb der Leitungen 116 oder einer Leitung angeordnet sein.

Die erste Anordnung kann vorteilhaft sein, wenn senkrecht zur Führungsrichtung FR1 ausreichend Bauraum an dem Fahrzeug 70 bzw. zwischen den Fahrzeugteilen 72, 74 zur Verfügung steht.

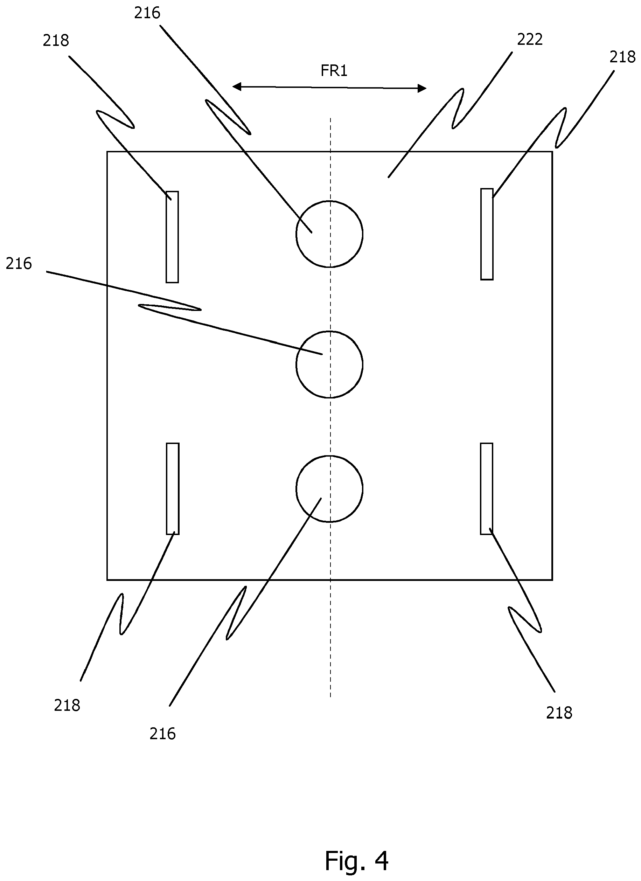

Figur 4 zeigt eine schematische Darstellung einer zweiten Anordnung der Stabilisierungselemente 218 und der Leitungen 216 bezogen auf das Basiselement 222, wobei von den drei Leitungen 216 und den Stabilisierungselementen 218 lediglich die Querschnittsformen schematisch dargestellt sind und auf das Basiselement 222 projiziert sind. Die Mittelpunkte der Querschnitte der Leitungen 216 liegen auf einer gemeinsamen Achse. Die gemeinsame Achse ist bezogen auf das Basiselement 122 mittig angeordnet. Die Stabilisierungselemente 218 sind jeweiligen Ecken des Basiselements 218 zugeordnet.

Vorlegend sind drei Leitungen 216 dargestellt, wobei auch lediglich eine, zwei, vier Leitungen 216 vorgesehen sein könnten.

Ferner ist die erste Führungsrichtung FR1 exemplarisch dargestellt, um zu verdeutlichen, in welche Richtung eine elastische Verformung der ersten Stabilisierungsvorrichtung gemäß der zweiten Anordnung zugelassen ist. Die starre Richtung der Stabilisierungselemente 218 ist senkrecht zu der Führungsrichtung FR1 ausgebildet.

Die zweite Anordnung kann vorteilhaft sein, wenn eine besonders hohe Stabilität der Stabilisierungsvorrichtung notwendig ist.

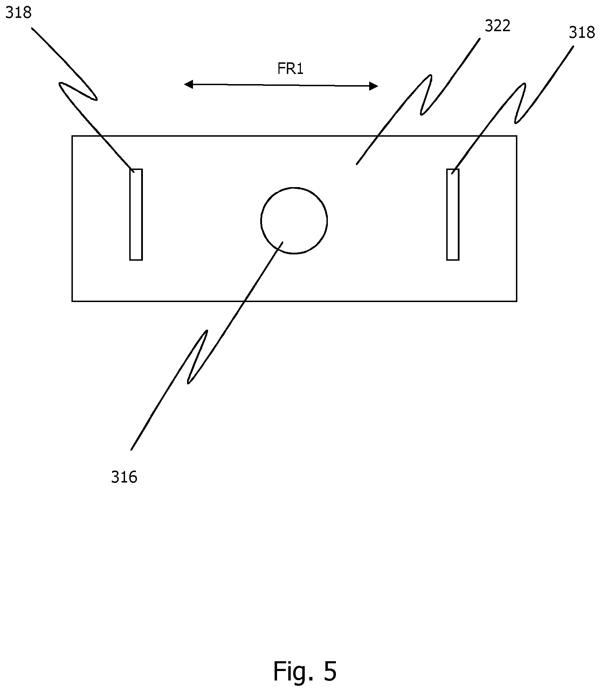

Figur 5 zeigt eine schematische Darstellung einer dritten Anordnung der Stabilisierungselemente 318 und der Leitung 316 bezogen auf das Basiselement 322, wobei von der Leitung 316 und den Stabilisierungselementen 318 lediglich die Querschnittsformen schematisch dargestellt sind und auf das Basiselement 322 projiziert sind. Der Mittelpunkt des Querschnitts der Leitung 316 ist mittig auf dem Basiselement 322 angeordnet. Die Stabilisierungselemente 318 sind seitlich der Leitung 316 auf dem Basiselement 322 angeordnet.

Vorlegend ist eine Leitung 316 dargestellt, wobei auch zwei oder mehr Leitungen vorgesehen sein können. Ferner kann lediglich ein Stabilisierungselement oder mehrere weitere Stabilisierungselemente können vorgesehen sein.

Ferner ist die erste Führungsrichtung FR1 exemplarisch dargestellt, um zu verdeutlichen, in welche Richtung eine elastische Verformung der ersten Stabilisierungsvorrichtung gemäß der dritten Anordnung zugelassen ist. Die starre Richtung der Stabilisierungselemente 318 ist senkrecht zu der Führungsrichtung FR1 ausgebildet.

Die dritte Anordnung kann vorteilhaft sein, wenn in Richtung der Führungsrichtung FR1 ausreichend Bauraum an dem Fahrzeug 70 bzw. zwischen den Fahrzeugteilen 72, 74 zur Verfügung steht.

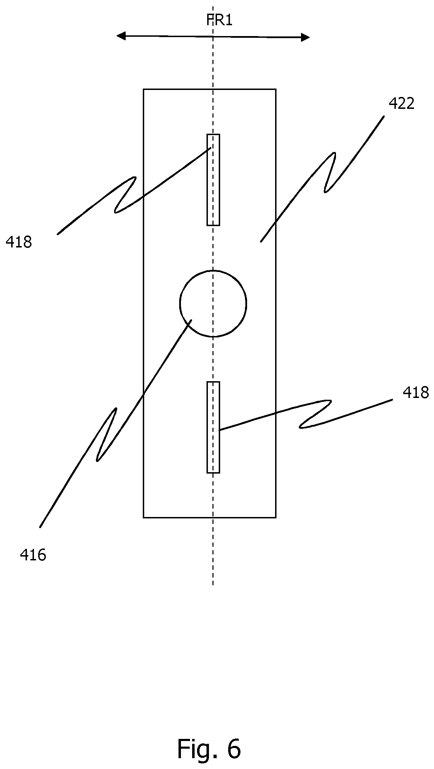

Figur 6 zeigt eine schematische Darstellung einer vierten Anordnung der Stabilisierungselemente 418 und der Leitung 416 bezogen auf das Basiselement 422, wobei von der Leitung 416 und den Stabilisierungselementen 418 lediglich die Querschnittsformen schematisch dargestellt sind und auf das Basiselement 422 projiziert sind. Der Mittelpunkt des Querschnitts der Leitung 416 ist mittig auf dem Basiselement 422 angeordnet. Die Mittelpunkte des Querschnitts der Leitung 416 und der Stabilisierungselemente 418 liegen auf der gemeinsamen Achse. Die Stabilisierungselemente 418 sind seitlich der Leitung 416 auf dem Basiselement 422 angeordnet.

Vorlegend ist eine Leitung 416 dargestellt, wobei auch zwei oder mehr Leitungen vorgesehen sein können. Ferner kann lediglich ein Stabilisierungselement oder mehrere weitere Stabilisierungselemente vorgesehen sein.

Ferner ist die erste Führungsrichtung FR1 exemplarisch dargestellt, um zu verdeutlichen, in welche Richtung eine elastische Verformung der ersten Stabilisierungsvorrichtung gemäß der vierten Anordnung zugelassen ist. Die starre Richtung der Stabilisierungselemente 418 ist senkrecht zu der Führungsrichtung FR1 ausgebildet.

Die vierte Anordnung kann vorteilhaft sein, wenn senkrecht zur Führungsrichtung FR1 ausreichend Bauraum an dem Fahrzeug 70 bzw. zwischen den Fahrzeugteilen 72, 74 zur Verfügung steht.

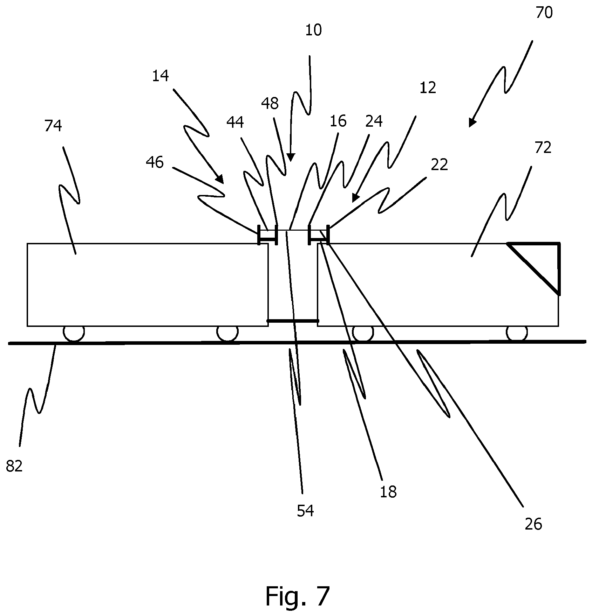

Figur 7 zeigt eine schematische Darstellung eines Fahrzeugs 70 mit einer Leitungsführungsanordnung 10. Das Fahrzeug 70 weist den ersten Fahrzeugteil 72 und den zweiten Fahrzeugteil 74 auf. Das Fahrzeug 70 ist ein Schienenfahrzeug, das auf Schienen 82 angeordnet ist.

Die Leitungsführungsanordnung 10 ist an einer Oberseite des Fahrzeugs 70 angebracht, wobei diese jedoch auch an einer anderen Stelle, beispielsweise in dem Raum zwischen den beiden Fahrzeugteile 72, 74 angeordnet sein kann.

Die Leitungsführungsanordnung 10 ist vereinfacht dargestellt. Sie weist die erste Stabilisierungsvorrichtung 12, die an dem ersten Fahrzeugteil 72 angebracht ist, sowie die zweite Stabilisierungsvorrichtung auf, die an dem zweiten Fahrzeugteil 74 angebracht ist. Zwischen den Stabilisierungsvorrichtungen 12, 14 erstreckt sich der freie Leitungsabschnitt 54.

Die erste Stabilisierungsvorrichtung 12 weist das zugehörige Basiselement 22, das fest an dem ersten Fahrzeugteil 72 angebracht ist, und das Führungselement 24 auf, das in dem Raum zwischen den Fahrzeugteilen 72, 74 angeordnet ist und nicht direkt mit dem ersten Fahrzeugteil 72 verbunden ist. Zwischen dem Führungselement 24 und dem Basiselement 22 erstreckt sich der erste Leitungsabschnitt 26 der Leitung 16, sowie das einzelne Stabilisierungselement 18. Dies ist der exemplarischen Darstellung geschuldet; die jeweiligen Stabilisierungsvorrichtungen 12, 14 könnten auch weitere jeweilige Stabilisierungselemente aufweisen.

Vorliegend ist bei der ersten Stabilisierungsvorrichtung 12 die Leitung 16 bzw. der erste Leitungsabschnitt 26 oberhalb des Stabilisierungselements 18 angeordnet. Ferner weist vorliegend die Leitungsführungsanordnung 10 die einzelne Leitung 16 auf, wobei es auch mehrere Leitungen vorgesehen sein könnten.

Die zweite Stabilisierungsvorrichtung 14 weist das zugehörige Basiselement 46, das fest an dem zweiten Fahrzeugteil 74 angebracht ist, und das Führungselement 48 auf, das in dem Raum zwischen den Fahrzeugteilen 72, 74 angeordnet ist und nicht direkt mit dem zweiten Fahrzeugteil 74 verbunden ist. Zwischen dem Führungselement 48 und dem Basiselement 46 erstreckt sich der zweite Leitungsabschnitt 44 der Leitung 16, sowie das einzelne Stabilisierungselement 50.

## Patentansprüche

1. Leitungsführungsanordnung (10) für ein Fahrzeug (70), insbesondere Schienenfahrzeug, zum Führen von zumindest einer Leitung (16) von einem ersten Fahrzeugteil (72) zu einem zweiten Fahrzeugteil (74), der mit dem ersten Fahrzeugteil (72) gelenkig gekoppelt ist, aufweisend:
eine erste Stabilisierungsvorrichtung (12), die an dem ersten Fahrzeugteil (72) anbringbar ist; und
die zumindest eine Leitung (16);
wobei die erste Stabilisierungsvorrichtung (12) in einer ersten Führungsrichtung (FR1) verformbar und senkrecht zu dieser starr ausgebildet ist; und
zwischen einem Basiselement (22) und einem Führungselement (24) zumindest ein Stabilisierungselement (18, 20; 118; 218; 318; 418) aufweist, das die Verformbarkeit der ersten Stabilisierungsvorrichtung (12) bestimmt; und
mit einem ersten Leitungsabschnitt (26) der Leitung (16) derart gekoppelt ist, dass die Verformbarkeit der ersten Stabilisierungsvorrichtung (12) eine Bewegung des ersten Leitungsabschnitts (26) in der ersten Führungsrichtung (FR1) zulässt und senkrecht dazu sperrt;
wobei die Längsachse des zumindest einen Stabilisierungselements (18, 20; 118; 218; 318; 418) parallel zu der jeweiligen Längsachse der zumindest einen Leitung (16) angeordnet ist.

2. Leitungsführungsanordnung (10) nach Anspruch 1, wobei das Stabilisierungselement (18, 20; 118; 218; 318; 418) einen im Wesentlichen rechteckigen Querschnitt aufweist, wobei bevorzugt die längere Kante des rechteckigen Querschnitts senkrecht zu der ersten bzw. zweiten Führungsrichtung (FR1, FR2) angeordnet ist, und/oder das Stabilisierungselement (18, 20; 118; 218; 318; 418) Stahl, insbesondere Federstahl, Kunststoff, einen Verbundwerkstoff, insbesondere kohlefaserverstärkten Kunststoff, oder eine Kombination daraus umfasst.

3. Leitungsführungsanordnung (10) nach einem der vorangehenden Ansprüche, wobei die erste Stabilisierungsvorrichtung (12) das Basiselement (22) aufweist, das dazu vorgesehen ist, starr mit dem jeweiligen Fahrzeugteil (72) verbunden zu sein, und/oder wobei die erste Stabilisierungsvorrichtung (12) das Führungselement (24) aufweist, das mittels des jeweiligen Stabilisierungselements (18, 20; 118; 218; 318; 418) an dem Basiselement (22) angebracht ist.

4. Leitungsführungsanordnung (10) nach Anspruch 3, wobei der erste Leitungsabschnitt (26) zwischen dem Basiselement (22) und dem Führungselement (24) der ersten Stabilisierungsvorrichtung (12) angeordnet ist.

5. Leitungsführungsanordnung (10) nach einem der vorangehenden Ansprüche, wobei die erste Stabilisierungsvorrichtung (12) zumindest ein Aufnahmeelement (36, 38) aufweist, das die Leitung (16) in der Stabilisierungsvorrichtung (12, 14) lagert.

6. Leitungsführungsanordnung (10) nach Anspruch 5, wobei das Aufnahmeelement (36, 38) die Leitung (16) fest mit der Stabilisierungsvorrichtung (12) verbindet; oder das Aufnahmeelement (36, 38) eine Bewegung der Leitung (16) relativ zu der Stabilisierungsvorrichtung (12) in einer Längenrichtung der Leitung (16) zulässt und/oder eine Rotation der Leitung (16) um eine Längenrichtung der Leitung (16) relativ zu der Stabilisierungsvorrichtung (12) zulässt.

7. Leitungsführungsanordnung (10) nach einem der Ansprüche 5 bis 6, wobei das Aufnahmeelement (36, 38) einen innenliegenden Bereich aufweist, der die Leitung (16) lagert, wobei bevorzugt ein Innendurchmesser des innenliegenden Bereichs in zumindest eine Richtung entlang der Leitung (16) zumindest teilweise zunimmt.

8. Leitungsführungsanordnung (10) nach einem der Ansprüche 5 bis 7, wobei die erste Stabilisierungsvorrichtung (12) ein erstes derartiges Aufnahmeelement (36, 38), das die Leitung (16) in dessen Basiselement (22, 46) lagert, und/oder ein zweites derartiges Aufnahmeelement (36, 38) aufweist, das die Leitung (16) in dessen Führungselement (24, 48) lagert.

9. Leitungsführungsanordnung (10) nach einem der vorangehenden Ansprüche, wobei eine Längsachse des ersten Leitungsabschnitts (26) und/oder eine Längsachse des Stabilisierungselements (18, 20) der ersten Stabilisierungsvorrichtung (12) im Wesentlichen senkrecht zu der ersten Führungsrichtung (FR1) angeordnet ist.

10. Leitungsführungsanordnung (10) nach einem der vorangehenden Ansprüche, wobei die Leitung (16) eine elektrische Leitung oder ein Medienschlauch zum Führen eines Mediums, beispielsweise ein Hydraulikschlauch oder ein Pneumatikschlauch ist.

11. Leitungsführungsanordnung (10) nach einem der vorangehenden Ansprüche, ferner umfassend
eine zweite Stabilisierungsvorrichtung (14), die an dem zweiten Fahrzeugteil (74) anbringbar ist;
wobei die zweite Stabilisierungsvorrichtung (14) in einer zweiten Führungsrichtung (FR2) verformbar und senkrecht zu dieser starr ausgebildet ist;
wobei die zweite Stabilisierungsvorrichtung (14) mit einem zweiten Leitungsabschnitt (44) der Leitung (16) derart gekoppelt ist, dass die Verformbarkeit der zweiten Stabilisierungsvorrichtung (14) eine Bewegung des zweiten Leitungsabschnitts (44) in der zweiten Führungsrichtung (FR2) zulässt und senkrecht dazu sperrt.

12. Leitungsführungsanordnung (10) nach Anspruch 11, wobei ein freier Leitungsabschnitt (54) der Leitung (16) die erste und die zweite Stabilisierungsvorrichtung (12, 14) miteinander koppelt.

13. Fahrzeug (70), aufweisend
einen ersten Fahrzeugteil (72),
einen zweiten Fahrzeugteil (74), der mit dem ersten Fahrzeugteil (72) gelenkig gekoppelt ist, und
zumindest eine Leitungsführungsanordnung (10) gemäß einem der Ansprüche 1 bis 12;
wobei die erste Stabilisierungsvorrichtung (12) an dem ersten Fahrzeugteil (72) angeordnet ist, und
wobei die Leitung (16) von dem ersten Fahrzeugteil (72) zu dem zweiten Fahrzeugteil (74) führt.

14. Fahrzeug (70), aufweisend
einen ersten Fahrzeugteil (72),
einen zweiten Fahrzeugteil (74), der mit dem ersten Fahrzeugteil (72) gelenkig gekoppelt ist, und
zumindest eine Leitungsführungsanordnung (10) gemäß Anspruch 11 oder 12;
wobei die erste Stabilisierungsvorrichtung (12) an dem ersten Fahrzeugteil (72) und die zweite Stabilisierungsvorrichtung (14) an dem zweiten Fahrzeugteil (74) angeordnet ist, und
wobei die Leitung (16) von dem ersten Fahrzeugteil (72) zu dem zweiten Fahrzeugteil (74) führt.

15. Fahrzeug (70) nach einem der Ansprüche 13 oder 14, wobei die erste Stabilisierungsvorrichtung (12) derart an dem ersten Fahrzeugteil (72) und die zweite Stabilisierungsvorrichtung (14) derart an dem zweiten Fahrzeugteil (74) angeordnet sind, dass in neutraler Stellung der beiden Fahrzeugteile (72, 74) zueinander eine Längsachse des ersten Leitungsabschnitts (26) mit einer Längsachse des zweiten Leitungsabschnitts (44) einen Winkel einschließt, bevorzugt im Bereich von 45 bis 135 Grad, besonders bevorzugt von im Wesentlichen 90 Grad, und/oder wobei die Fahrzeugteile (72, 74) um eine Drehachse drehbar miteinander gekoppelt sind und die Drehachse im Wesentlichen senkrecht zu der ersten Führungsrichtung (FR1) und/oder zweiten Führungsrichtung (FR2) angeordnet ist.

## Claims

1. Cable guide assembly (10) for a vehicle (70), in particular a rail vehicle, for guiding at least one cable (16) from a first vehicle part (72) to a second vehicle part (74), which is coupled in an articulated manner to the first vehicle part (72), comprising:
a first stabilisation device (12), which can be mounted on the first vehicle part (72); and
the at least one cable (16);
wherein the first stabilisation device (12) is formed to be deformable in a first guiding direction (FR1) and rigid perpendicular to this; and
includes at least one stabilisation element (18, 20; 118; 218; 318; 418), which determines the deformability of the first stabilisation device (12), between a base element (22) and a guide element (24); and
is coupled to a first cable section (26) of the cable (16) in such a way that the deformability of the first stabilisation device (12) permits movement of the first cable section (26) in the first guiding direction (FR1) and blocks it perpendicular thereto;
wherein the longitudinal axis of the at least one stabilisation element (18, 20; 118, 120; 318; 418) is arranged parallel to the respective longitudinal axis of the at least one cable (16).

2. Cable guide assembly (10) according to claim 1, wherein the stabilisation element (18, 20; 118; 218; 318; 418) has a substantially rectangular cross section, wherein preferably the longer edge of the rectangular cross section is arranged perpendicular to the first and second guiding direction (FR1, FR2), respectively, and/or the stabilisation element (18, 20; 118; 218; 318; 418) comprises steel, in particular spring steel, plastic, a composite material, in particular carbon-fibre-reinforced plastic, or a combination thereof.

3. Cable guide assembly (10) according to any one of the preceding claims, wherein the first stabilisation device (12) comprises the base element (22), which is provided to be connected fixedly to the respective vehicle part (72), and/or wherein the first stabilisation device (12) comprises the guide element (24), which is mounted by means of the respective stabilisation element (18, 20; 118; 218; 318; 418) on the base element (22).

4. Cable guide assembly (10) according to claim 3, wherein the first cable section (26) is arranged between the base element (22) and the guide element (24) of the first stabilisation device (12).

5. Cable guide assembly (10) according to any one of the preceding claims, wherein the first stabilisation device (12) comprises at least one holding element (36, 38), which supports the cable (16) in the stabilisation device (12, 14).

6. Cable guide assembly (10) according to claim 5, wherein the holding element (36, 38) connects the cable (16) fixedly to the stabilisation device (12); or
the holding element (36, 38) permits movement of the cable (16) relative to the stabilisation device (12) in a longitudinal direction of the cable (16) and/or rotation of the cable (16) about a longitudinal direction of the cable (16) relative to the stabilisation device (12).

7. Cable guide assembly (10) according to any one of claims 5 to 6, wherein the holding element (36, 38) has an interior region which supports the cable (16), wherein preferably an inner diameter of the interior region increases at least partially in at least one direction along the cable (16).

8. Cable guide assembly (10) according to any one of claims 5 to 7, wherein the first stabilisation device (12) comprises a first such holding element (36, 38), which supports the cable (16) in its base element (22, 46), and/or comprises a second such holding element (36, 38), which supports the cable (16) in its guide element (24, 48).

9. Cable guide assembly (10) according to any one of the preceding claims, wherein a longitudinal axis of the first cable section (26) and/or a longitudinal axis of the stabilisation element (18, 20) of the first stabilisation device (12) is arranged substantially perpendicular to the first guiding direction (FR1).

10. Cable guide assembly (10) according to any one of the preceding claims, wherein the cable (16) is an electric cable or a media hose for guiding a medium, for example a hydraulic hose or a pneumatic hose.

11. Cable guide assembly (10) according to any one of the preceding claims, further comprising
a second stabilisation device (14), which can be mounted on the second vehicle part (74);
wherein the second stabilisation device (14) is formed to be deformable in a second guiding direction (FR2) and is formed rigid perpendicular to this;
wherein the second stabilisation device (14) is coupled to a second cable section (44) of the cable (16) such that the deformability of the second stabilisation device (14) permits movement of the second cable section (44) in the second guiding direction (FR2) and blocks it perpendicular thereto.

12. Cable guide assembly (10) according to claim 11, wherein a free cable section (54) of the cable (16) links the first and the second stabilisation device (12, 14) to one another.

13. Vehicle (70), comprising
a first vehicle part (72),
a second vehicle part (74), which is coupled in an articulated manner to the first vehicle part (72), and
at least one cable guide assembly (10) according to any one of claims 1 to 12;
wherein the first stabilisation device (12) is arranged on the first vehicle part (72), and
wherein the cable (16) leads from the first vehicle part (72) to the second vehicle part (74).

14. Vehicle (70), comprising
a first vehicle part (72),
a second vehicle part (74), which is coupled in an articulated manner to the first vehicle part (72), and
at least one cable guide assembly (10) according to claim 11 or 12;
wherein the first stabilisation device (12) is arranged on the first vehicle part (72) and the second stabilisation device (14) is arranged on the second vehicle part (74), and
wherein the cable (16) leads from the first vehicle part (72) to the second vehicle part (74).

15. Vehicle (70) according to one of claims 13 or 14, wherein the first stabilisation device (12) is arranged in such a way on the first vehicle part (72) and the second stabilisation device (14) is arranged in such a way on the second vehicle part (14) that in a neutral position of the two vehicle parts (72, 74) relative to one another, a longitudinal axis of the first cable section (26) encloses with a longitudinal axis of the second cable section (44) an angle, preferably in the range of 45 to 135 degrees, particularly preferably of substantially 90 degrees, and/or wherein the vehicle parts (72, 74) are linked to one another rotatably about a rotation axis and the rotation axis is arranged substantially perpendicular to the first guiding direction (FR1) and/or second guiding direction (FR2).

## Revendications

1. Agencement de guidage de câbles (10) pour un véhicule (70), en particulier un véhicule ferroviaire, destiné à guider au moins un câble (16) depuis une première partie de véhicule (72) vers une deuxième partie de véhicule (74) qui est couplée de manière articulée à la première partie de véhicule (72), comprenant :
un premier dispositif de stabilisation (12) pouvant être fixé à la première partie de véhicule (72) ; et
ledit au moins un câble (16) ;
dans lequel le premier dispositif de stabilisation (12) est conçu déformable dans une première direction de guidage (FR1) et rigide perpendiculairement à celle-ci ; et
comprend entre un élément de base (22) et un élément de guidage (24) au moins un élément de stabilisation (18, 20 ; 118 ; 218 ; 318 ; 418) qui détermine la déformabilité du premier dispositif de stabilisation (12) ; et
est couplé à un premier tronçon de câble (26) du câble (16) de telle sorte que la déformabilité du premier dispositif de stabilisation (12) permet un mouvement du premier tronçon de câble (26) dans la première direction de guidage (FR1) et le bloque perpendiculairement à celle-ci ;
dans lequel l'axe longitudinal dudit au moins un élément de stabilisation (18, 20 ; 118 ; 218 ; 318 ; 418) est disposé parallèlement à l'axe longitudinal respectif dudit au moins un câble (16).

2. Agencement de guidage de câbles (10) selon la revendication 1, dans lequel l'élément de stabilisation (18, 20 ; 118 ; 218 ; 318 ; 418) présente une section transversale essentiellement rectangulaire, dans lequel le côté le plus long de la section transversale rectangulaire est de préférence disposé perpendiculairement à la première ou à la deuxième direction de guidage (FR1, FR2), et/ou l'élément de stabilisation (18, 20 ; 118 ; 218 ; 318 ; 418) comprend de l'acier, en particulier de l'acier à ressort, une matière plastique, un matériau composite, en particulier une matière plastique renforcée de fibres de carbone, ou une combinaison de ceux-ci.

3. Agencement de guidage de câbles (10) selon l'une quelconque des revendications précédentes, dans lequel le premier dispositif de stabilisation (12) comprend l'élément de base (22) qui est prévu pour être relié de manière rigide à la partie de véhicule respective (72), et/ou dans lequel le premier dispositif de stabilisation (12) comprend l'élément de guidage (24) qui est fixé à l'élément de base (22) au moyen de l'élément de stabilisation respectif (18, 20 ; 118 ; 218 ; 318 ; 418).

4. Agencement de guidage de câbles (10) selon la revendication 3, dans lequel le premier tronçon de câble (26) est disposé entre l'élément de base (22) et l'élément de guidage (24) du premier dispositif de stabilisation (12).

5. Agencement de guidage de câbles (10) selon l'une quelconque des revendications précédentes, dans lequel le premier dispositif de stabilisation (12) comprend au moins un élément de réception (36, 38) qui loge le câble (16) dans le dispositif de stabilisation (12, 14).

6. Agencement de guidage de câbles (10) selon la revendication 5, dans lequel l'élément de réception (36, 38) relie le câble (16) de manière fixe au dispositif de stabilisation (12) ; ou l'élément de réception (36, 38) permet un mouvement du câble (16) par rapport au dispositif de stabilisation (12) dans une direction longitudinale du câble (16) et/ou permet une rotation du câble (16) autour d'une direction longitudinale du câble (16) par rapport au dispositif de stabilisation (12).

7. Agencement de guidage de câbles (10) selon l'une quelconque des revendications 5 à 6, dans lequel l'élément de réception (36, 38) comprend une zone intérieure qui loge le câble (16), dans lequel un diamètre intérieur de la zone intérieure augmente de préférence au moins partiellement dans au moins une direction le long du câble (16).

8. Agencement de guidage de câbles (10) selon l'une quelconque des revendications 5 à 7, dans lequel le premier dispositif de stabilisation (12) comprend un premier élément de réception (36, 38) d'un tel type qui loge le câble (16) dans son élément de base (22, 46) et/ou un deuxième élément de réception (36, 38) d'un tel type qui loge le câble (16) dans son élément de guidage (24, 48).

9. Agencement de guidage de câbles (10) selon l'une quelconque des revendications précédentes, dans lequel un axe longitudinal du premier tronçon de câble (26) et/ou un axe longitudinal de l'élément de stabilisation (18, 20) du premier dispositif de stabilisation (12) sont disposés essentiellement perpendiculairement à la première direction de guidage (FR1).

10. Agencement de guidage de câbles (10) selon l'une quelconque des revendications précédentes, dans lequel le câble (16) est un câble électrique ou un tuyau pour fluides destiné à guider un fluide, par exemple un tuyau hydraulique ou un tuyau pneumatique.

11. Agencement de guidage de câbles (10) selon l'une quelconque des revendications précédentes, comprenant en outre
un deuxième dispositif de stabilisation (14) pouvant être fixé à la deuxième partie de véhicule (74) ;
dans lequel le deuxième dispositif de stabilisation (14) est conçu déformable dans une deuxième direction de guidage (FR2) et rigide perpendiculairement à celle-ci ;
dans lequel le deuxième dispositif de stabilisation (14) est couplé à un deuxième tronçon de câble (44) du câble (16) de telle sorte que la déformabilité du deuxième dispositif de stabilisation (14) permet un mouvement du deuxième tronçon de câble (44) dans la deuxième direction de guidage (FR2) et le bloque perpendiculairement à celle-ci.

12. Agencement de guidage de câbles (10) selon la revendication 11, dans lequel un tronçon de câble libre (54) du câble (16) relie entre eux le premier et le deuxième dispositif de stabilisation (12, 14).

13. Véhicule (70) comprenant
une première partie de véhicule (72),
une deuxième partie de véhicule (74) couplée de manière articulée à la première partie de véhicule (72) et
au moins un dispositif de guidage de câbles (10) selon l'une quelconque des revendications 1 à 12 ;
dans lequel le premier dispositif de stabilisation (12) est disposé sur la première partie de véhicule (72) et
dans lequel le câble (16) mène de la première partie de véhicule (72) à la deuxième partie de véhicule (74).

14. Véhicule (70) comprenant
une première partie de véhicule (72),
une deuxième partie de véhicule (74) couplée de manière articulée à la première partie de véhicule (72) et
au moins un dispositif de guidage de câbles (10) selon la revendication 11 ou 12 ;
dans lequel le premier dispositif de stabilisation (12) est disposé sur la première partie de véhicule (72) et le deuxième dispositif de stabilisation (14) est disposé sur la deuxième partie de véhicule (74), et
dans lequel le câble (16) mène de la première partie de véhicule (72) à la deuxième partie de véhicule (74).

15. Véhicule (70) selon l'une des revendications 13 ou 14, dans lequel le premier dispositif de stabilisation (12) est disposé sur la première partie de véhicule (72) et le deuxième dispositif de stabilisation (14) est disposé sur la deuxième partie de véhicule (74) de telle sorte que, dans une position neutre des deux parties de véhicule (72, 74) l'une par rapport à l'autre, un axe longitudinal du premier tronçon de câble (26) forme un angle avec un axe longitudinal du deuxième tronçon de câble (44), de préférence compris entre 45 et 135 degrés, de manière particulièrement préférée de 90 degrés, et/ou dans lequel les parties de véhicule (72, 74) sont couplées entre elles de manière à pouvoir tourner autour d'un axe de rotation et l'axe de rotation est disposé essentiellement perpendiculairement à la première direction de guidage (FR1) et/ou à la deuxième direction de guidage (FR2).
